# EUROPEAN PATENT APPLICATION

(11) **EP 3 306 482 A1**
(43) Date of publication of application: **11.04.2018**
(21) Application number: 17194948.0
(22) Date of filing: 05.10.2017
(51) Int. Cl.: G06F 13/12

(54) **CUSTOM IC**

(30) Priority: 06.10.2016 JP 2016198147
(71) Applicant: YAZAKI CORPORATION, Minato-ku Tokyo 108-8333 (JP)
(72) Inventor: SOWA, Mihiko, Shizuoka, 421-0407 (JP)
(74) Representative: Hoffmann Eitle

(57) **Abstract**

A custom IC designed so as to control an operation of a predetermined output device includes one or more terminals for setting output device capable to set control information corresponding to the predetermined output device to be connected to an output terminal of the custom IC. A setting signal outputted from the terminals for setting output device is generated depending on the presence or absence of a connection between each of the terminals for setting output device and a ground potential through a conductive connecting member.

## Description

### Technical Field

The present application relates to a custom IC designed so as to control a predetermined output device.

### Background Art

Conventionally, there is utilized a technique of: connecting an IC (integrated circuit, IC chip) constituting a slave unit to a network, such as an in-vehicle LAN (e.g. CAN (Controller Area Network), LIN (Local Interconnect Network), CXPI (Clock Extension Peripheral Interface), etc.); allowing the IC to receive a command from an ECU (Electronic Control Unit) constituting a master unit; and controlling the driving of a predetermined output device (load).

As for the drive control of an output device with the use of such an IC, a variety of techniques have been proposed (see JP2014-108695 A).

### Summary

In the conventional techniques, however, it was necessary that, in an IC constituting a slave unit, each IC chip contains the control information (including programs and data) corresponding to an control device (load) whose operation is to be controlled.

Therefore, there is need of preparing an exclusive IC chip with respect to each object to be controlled, thereby raising a problem of increasing a manufacturing cost and a problem of complicating the management of the item numbers of components.

It is therefore an object of the present application to provide a custom IC which can be commonly used for each of different output devices to be controlled and which is capable of restricting the manufacturing cost and simplifying the management of the item numbers of components.

In order to attain the above object, a custom IC according to an aspect of the present application, that is designed so as to control an operation of a predetermined output device, includes one or more terminals for setting output device capable to set control information corresponding to the predetermined output device to be connected to an output terminal of the custom IC. A setting signal outputted from the terminals for setting output device is generated depending on presence or absence of a connection between each of the terminals for setting output device and a ground potential through a conductive connecting member.

The custom IC may further include a storing device configured to store one or more control information corresponding to the predetermined output device.

The custom IC may further include one or more ID setting terminals capable to set an ID for identifying the custom IC, wherein ID information to be outputted from the ID setting terminals is generated by presence or absence of a connection between each of the ID setting terminals and the ground potential through the connecting member.

The custom IC may be connected to an in-vehicle LAN to constitute a slave unit and also configured to control an operation of the predetermined output device as an on-vehicle apparatus mounted on a vehicle in accordance with a command from a master unit connected to the in-vehicle LAN.

With the aspect of the present application, even if respective output devices to be controlled are different from each other, the custom IC can be used for each of the output devices commonly. As a result, it is possible to reduce the manufacturing cost and also simplify the management of the item numbers of components.

### Brief Description of Drawings

Fig. 1 is an explanatory diagram of a connecting state of a custom IC according to a first embodiment to an in-vehicle LAN.
Figs. 2A and 2B are typical configuration diagrams illustrating configuration examples of a conventional custom IC.
Figs. 3A and 3B are typical configuration diagrams illustrating configuration examples of the custom IC according to the first embodiment.
Fig. 4 is a diagram illustrating an example of the variation setting terminal state in the custom IC according to the first embodiment.
Fig. 5 is an explanatory diagram of a connecting state of a custom IC according to a second embodiment to the in-vehicle LAN.
Figs. 6A and 6B are typical configuration diagrams illustrating other configuration examples of the conventional custom IC.
Figs. 7A and 7B are typical configuration diagrams illustrating configuration examples of the custom IC according to the second embodiment.
Fig. 8 is a diagram illustrating an example of an ID setting terminal state in the custom IC according to the second embodiment.

### Description of Embodiments

### (First Embodiment)

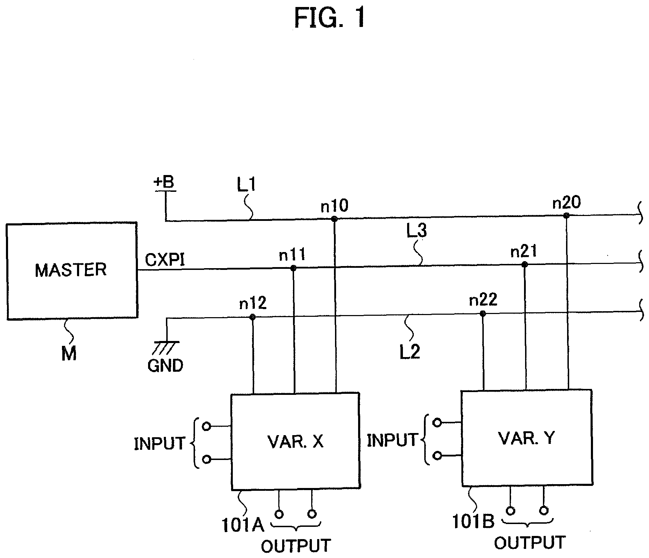

A custom IC 101 (101A, 101B) according to a first embodiment will be described with reference to Figs. 1 to 4.

In an example illustrated in Fig. 1, the custom IC 101 (101A, 101B) according to the first embodiment is connected to a CXPI (Clock Extension Peripheral Interface), which is a type of in-vehicle LAN, to constitute a slave unit (subordinate unit) in relation to a master unit (main unit).

More specifically, as illustrated in Fig. 1, the first custom IC 101A is connected to a first power supply line L1 through a node n10 and also connected to a second power supply line L2 through a node n12. The second custom 1C 101B is connected to the first power supply line L1 through a node n20 and also connected to the second power supply line L2 through a node n22.

The first power supply line L1 is connected to a positive electrode of an in-vehicle battery. While, the second power supply line L2 is connected to a ground potential through a vehicle body or the like.

The first custom 1C 101A is connected to a communication line L3 of the CXPI through a node n1 and also adapted so as to transmit commands, various data, and the like to and from the master unit M. The second custom IC 101B is connected to the communication line L3 of the CXPI through a node n21 and also adapted so as to transmit commands, various data, and the like to and from the master unit M.

Although Fig. 1 illustrates an example of connecting two custom ICs 101A, 101 B to the CXPI for the sake of simplicity of explanation, the number of custom ICs is not limited to this, and three or more custom ICs may be connected to the CXPI.

Although the constitution is not limited especially, the master unit M may be composed of an in-vehicle ECU (Electronic Control Unit).

Each of the custom ICs 101A, 101B includes input terminals for inputting data and the like and output terminals for outputting a control signal and the like to an output device.

A variation (e.g. VAR. X, VAR. Y of Fig. 1) of a control program (logic) corresponding to the kind of an output device to be controlled is set in each of the custom ICs 101A, 101B.

In connection, it is noted that the variation designates, for example, the kind of a setting program (logic) that function as, for example, a driver for motor, a driver for valve, and the like.

Further, in the first embodiment, it is assumed that setting the variation has the same meaning as setting the output device. That is, in the first embodiment, a terminal for setting the output device can also be referred to as a terminal for setting the variation.

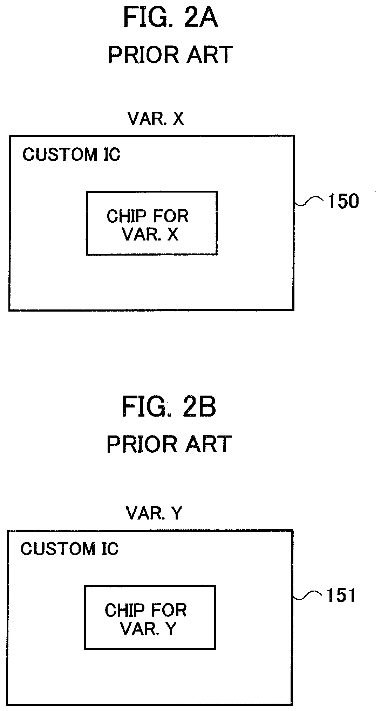

In advance of describing mechanism of setting the output device (setting of the variation) in the custom ICs 101A, 101B according to the first embodiment, how to set the output device in conventional custom ICs 150, 151 will be described with reference to Figs. 2A and 2B.

As illustrated in Fig. 2A, the first custom IC 150 of the conventional example is equipped with a chip for a variation X (e.g. a nonvolatile RAM or the like) which stores, for example, a control program for the variation X, its control data or the like.

On the other hand, as illustrated in Fig. 2B, the second custom IC 151 of the conventional example is equipped with a chip for variation Y (e.g. a nonvolatile RAM or the like) that stores a control program for the variation Y, its control data and the like.

In this way, each of the conventional custom ICs 150, 151 has been required to have an exclusive chip that stores an exclusive control program, its control data, and the like with respect to each variation (i.e. for each output device), thereby causing the manufacturing cost to be increased and also causing the management of the item numbers of components to be complicated.

The custom IC 101 (101A, 101B) according to the first embodiment eliminates such drawbacks that the conventional custom ICs 150, 151 are facing.

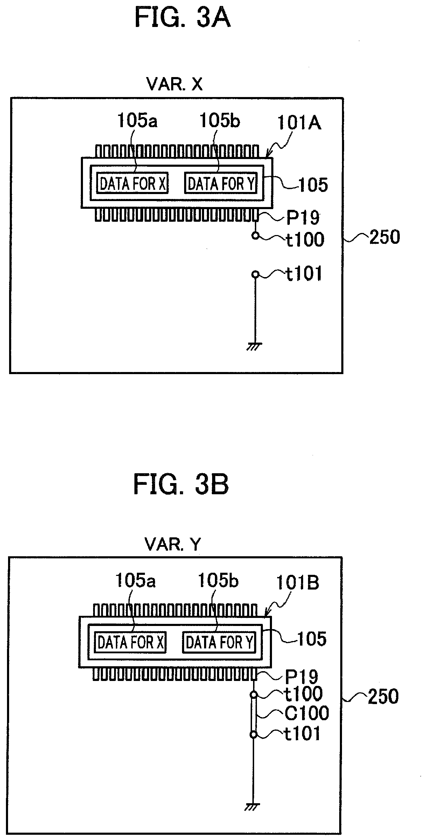

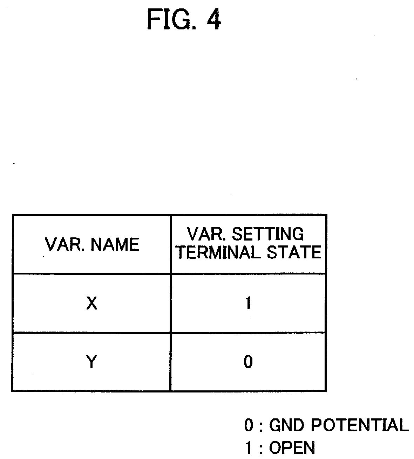

The configuration examples of the custom IC 101 (101A, 101B) according to the first embodiment will be described with reference to Figs. 3A, 3B, and 4.

As illustrated in Figs. 3A and 3B, each of the first custom IC 101A and the second custom IC 101B mounted on a substrate 250 is composed of an IC chip having a common standard (that is, shared IC chips). ,

Each of the custom ICs 101A, 101B has a built-in nonvolatile RAM 105 as a storage device. In a predetermined area 105a of the nonvolatile RAM 105, there is stored a control program for the variation X, its control data and so on. In another predetermined area 105b of the nonvolatile RAM 105, there is stored a control program for the variation Y, its control data, and so on.

Among a plurality of pins provided in each of the custom ICs 101A, 101B (20 pins on one side and 40 pins in total in the first embodiment), a lower rightmost pin P19 in each of Figs. 3A and 3B constitutes the terminal for setting output device.

The configuration example illustrated in each of Figs. 3A and 3B illustrates a single pin for the terminal for setting the output device for the sake of simplicity of explanation (That is, the illustrated configuration is intended to set an output device of 1 bit (two kinds)). However, the number of terminals for setting the output device is not limited to this, and two or more pins for the terminals for setting the output device may be selected so as to correspond to an output device of 2 bits (4 kinds) or more. In such a case, in a predetermined area of the nonvolatile RAM 105 built in each of the custom ICs 101A, 101B, there would be stored control programs of kinds corresponding to the number of bits that the terminals for setting the output device can set and also stored their control data and the like.

A first terminal t100 for connection is connected to the pin P 19 as the terminal for setting output device. On the substrate 250, a second terminal t101 connected to the ground potential (GND) is arranged at a position separated from the first terminal t100 by a predetermined distance.

As illustrated in Fig. 3A, when setting the output-device setting for the variation X in the first custom IC 101A, it is necessary to bring the relationship between the first terminal t100 and the second terminal t101 into a condition where they are not connected to each other (that is, an open state shown with "1" of the diagram of Fig. 4).

In this open state, as there is no need of using a later-mentioned connecting member C100, it is possible to reduce the manufacturing cost.

When the output-device setting is set for the variation X in this way, control program, control data, and the like for the variation X, which are stored in the predetermined area 105a of the nonvolatile RAM 105, are selectively read out in accordance with a potential appearing at the pin P19 as the terminal for setting output device and the command from the master unit M illustrated in Fig. 1, thereby executing the control of an output device (e.g. a motor etc.) connected to the first custom IC 101A.

On the other hand, as illustrated in Fig. 3B, if setting the output-device setting for the variation Y in the second custom IC 101B, the first terminal t100 and the second terminal t101 are connected to each other through the conductive connecting member C100.

The connecting member C100 is formed by, for example, a plate-shaped or strip-shaped conductor (Cu or the like), and its ends are soldered to the first terminal t100 and the second terminal t101, respectively.

Under such a connecting state, the variation-setting terminal state becomes a GND potential state illustrated with "0" of the diagram of Fig. 4.

When the output-device setting is set for the variation Y in this way, control program, control data, and the like for the variation Y, which are stored in the predetermined area 105b of the nonvolatile RAM 105, are selectively read out in accordance with the GND potential appearing at the pin P19 as the terminal for setting output device and the command from the master unit M illustrated in Fig. 1, thereby executing the control of an output device (e.g. a valve or the like) connected to the second custom IC 101B.

As described above, with the custom IC 101 (101A, 101B) according to the first embodiment, even when the output devices to be controlled are different from each other, it is possible to share (standardize) ICs of the same standard, thereby allowing the manufacturing cost to be suppressed and also allowing the management of the item numbers of components to be simplified.

In addition, as described above, if the first terminal t100 and the second terminal t101 are not connected to each other, it is possible to reduce the manufacturing cost furthermore because of no need of the connecting member C 100.

Although the configuration examples illustrated in Figs. 3A and 3B illustrate the cases of connecting and disconnecting the first terminal t100 and the second terminal t101, the arrangement is not limited thereto, and the pin P 19 as the terminal for setting output device may be directly connected to or disconnected from the second terminal t101, provided that the first terminal t100 is omitted.

The in-vehicle LAN connected to the custom IC 101 (101A, 101B) is not limited to CXPI, but CAN (Controller Area Network), LIN (Local Interconnect Network), or the like may be adopted for the in-vehicle LAN alternatively.

### (Second Embodiment)

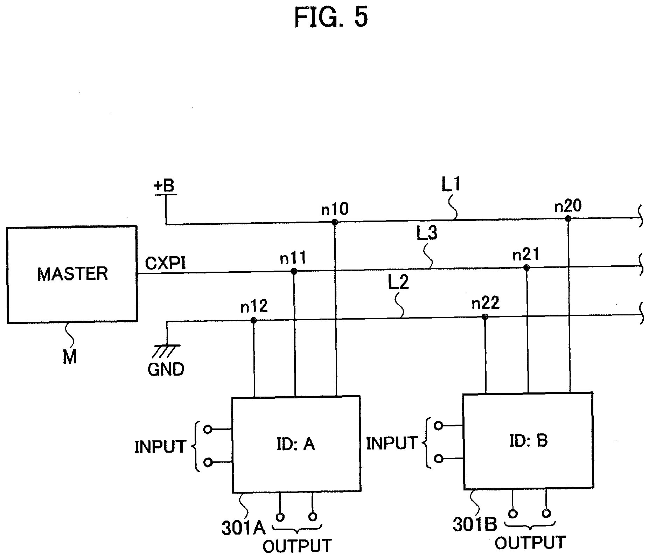

A custom IC 301 (301A, 301B) according to a second embodiment will be described with reference to Figs. 5 to 8.

In the example illustrated in Fig. 5, the custom IC 301 (301A, 301B) according to the second embodiment is connected to a CXPI, which is a type of in-vehicle LAN, to constitute a slave unit (subordinate unit) in relation to a master unit (main unit) M.

More specifically, as illustrated in Fig. 5, the first custom IC 301A is connected to the first power supply line L1 through the node n10 and also connected to the second power supply line L2 through the node n12. Further, the second custom IC 301B is connected to the first power supply line L1 through the node n20 and also connected to the second power supply line L2 through the node n22.

The first power supply line L1 is connected to a positive electrode of an in-vehicle battery. While, the second power supply line L2 is connected to the ground potential through a vehicle body or the like.

The first custom IC 301A is connected to the communication line L3 of the CXPI through the node n11 and also adapted so as to transmit commands, various data, and the like to and from the master unit M. The second custom IC 301B is connected to the communication line L3 of the CXPI through the node n21 and also adapted so as to transmit commands, various data, and the like to and from the master unit M.

Although Fig. 5 illustrates an example of connecting two custom ICs 301A, 301B to the CXPI for the sake of simplicity of explanation, the number of custom ICs is not limited to this, and three or more custom ICs may be connected to the CXPI.

Although the constitution is not limited especially, the master unit M may be composed of an in-vehicle ECU.

Each of the custom ICs 301A, 301B includes input terminals for inputting data and the like, and output terminals for outputting a control signal and the like to an output device.

For each of the custom ICs 301A and 301B, there are set an ID ("A", "B", and so on) as an identifier (slave-node name) for identifying each custom IC301 and a variation (e.g. VAR. X, VAR. Y of Fig. 1) of a control program (logic) corresponding to the kind of an output device to be controlled.

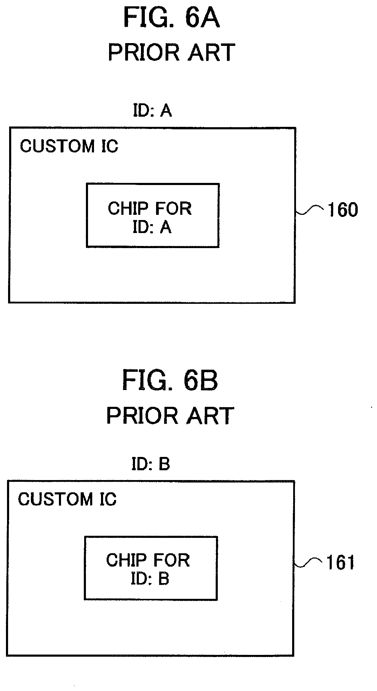

In advance of describing mechanism of setting ID (setting of slave-node name) in each of the custom ICs 301A, 301B according to the second embodiment, how to set ID (identifier) in each of conventional custom ICs 160, 161 will be described with reference to Figs. 6A and 6B.

Each of Figs. 6A and 6B is a typical configuration diagram illustrating a configuration example of each of the conventional custom ICs 160,161.

As illustrated in Fig. 6A, the first custom IC 160 of the conventional example is equipped with a chip for ID: "A" (e.g. a nonvolatile RAM or the like) which stores the identifying information (identifying data) designating, for example, ID: "A".

On the other hand, as illustrated in Fig. 6B, the second custom IC 161 of the conventional example is equipped with a chip for ID: "B" (e.g. a nonvolatile RAM or the like) which stores the identifying information (identifying data) designating, for example, ID: "B".

In this way, each of the conventional custom ICs 160, 161 has been required to have a chip that stores individual identifying information (identifying data) with respect to each ID, thereby causing the manufacturing cost to be increased and also causing the management of the item numbers of components to be complicated

The custom IC 301 (301A, 301B) according to the second embodiment eliminates such drawbacks that the conventional custom ICs 160,161 are facing.

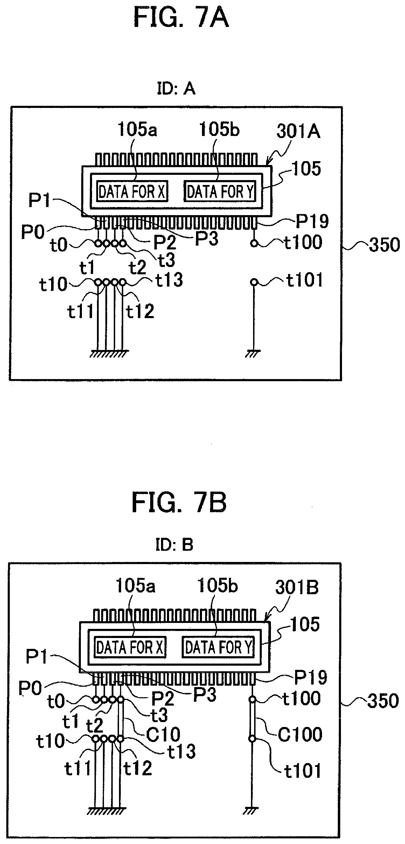

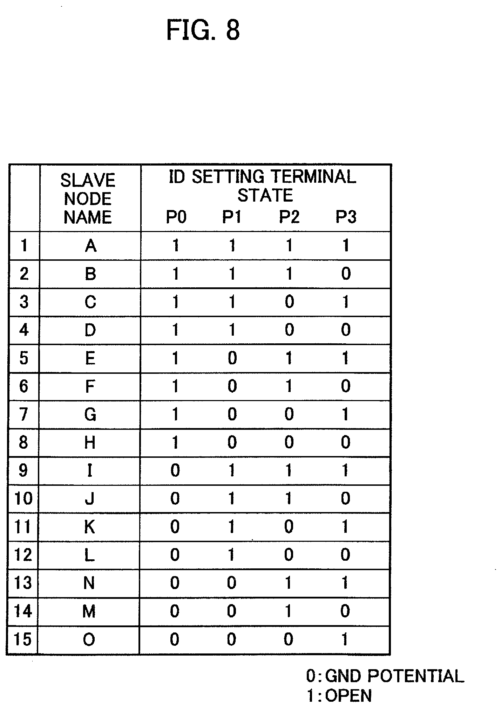

The configuration examples of the custom IC 301 (301A, 301B) according to the second embodiment will be described with reference to Figs. 7A, 7B, and 8.

As illustrated in Figs. 7A and 7B, the respective custom ICs 301A, 301B mounted on substrates 350 are comprised of IC chips having a common standard (that is, shared IC chips) in order to reduce the manufacturing cost.

Each of the custom ICs 301A, 301B has a built-in nonvolatile RAM 105 as a storage device. In the custom IC 301 according to the second embodiment, a control program, control data, and the like for the variation X, which are similar to those of the first embodiment, are stored in a predetermined area 105a of the nonvolatile RAM 105. Further, a control program, control data, and the like for the variation Y, are also stored in another predetermined area 105b of the nonvolatile RAM 105.

Among a plurality of pins provided in each of the custom ICs 301A, 301B (20 pins on one side and 40 pins in total in the second embodiment), a lower rightmost pin P19 in Fig. 3A (3B) constitutes a terminal for setting output device.

The configuration example illustrated in each of Figs. 7A and 7B illustrates a single pin for the terminal for setting output device for the sake of simplicity of explanation (that is, the illustrated configuration is intended to set an output device of 1 bit (two kinds)). However, the number of terminals for setting output device is not limited to this, and two or more pins for the terminals for setting output device may be selected so as to correspond to an output device of 2 bits (4 kinds) or more. In such a case, in a predetermined area of the nonvolatile RAM 105 included in each of the custom ICs 301A, 301B, there would be stored control programs of kinds corresponding to the number of bits that the terminals for setting output device can set and also stored their control data and the like.

A first terminal t100 for connection is connected to the pin P19 as the terminal for setting output device. On the substrate 350, a second terminal t101 connected to the ground potential (GND) is arranged at a position separated from the first terminal t100 by a predetermined distance.

Among the plurality of pins provided in each of the custom ICs 301A, 301B, four pins P0 to P3 from the lower leftmost end in each of Figs. 3A and 3B constitute ID setting terminals for setting ID information.

The configuration example illustrated in each of Figs. 7A and 7B illustrates four pins for the ID setting terminals for the sake of simplicity of explanation (that is, the illustrated configuration is intended to set ID of 4 bits (sixteen kinds)). However, the number of terminals for setting ID is not limited to this, and five or more pins for the ID setting terminals may be selected so as to correspond to ID setting of 5 bits or more.

Third terminals t0 to t3 for connection are connected to the corresponding pins P0-P3 as the respective ID setting terminals. On the substrate 350, fourth terminals t10-t13 connected to the ground potential (GND) are arranged at respective positions separated from the third terminals t0 to t3 by a predetermined distance.

Then, when setting one of the pins P0-P3 as each ID setting terminal to the GND potential state designated by "0" in the diagram of Fig. 8, corresponding first terminal t0-t3 and corresponding second terminal t10-t13 are electrically connected to each other through a conductive connecting member C10.

The connecting member C10 is formed by, for example, a plate-shaped or strip-shaped conductor (Cu or the like), and its ends are soldered to one of the first terminals t0-t3 and the corresponding second terminal t10-13 opposed to each other.

Among the pins P0 to P3 as the ID setting terminals, a specific pin which is not connected to the connection member C10 is brought into an opened state and also indicated by "1" in the diagram of Fig. 8.

Thus, the signals "0" and "1" indicating the codes "A" to "O" as ID (slave node name) are generated depending on the presence or absence of a connection using the connecting member C10.

That is, in the example illustrated in Fig. 8, when all the pins P0 to P3 are in the opened state (i.e. a state of Fig. 7A), the ID of "A" composed of the combination "1111" is generated. If the pins P0 to P2 are in the opened state while only the pin P3 is at the GND potential (i.e. a state of Fig. 7B), the ID of "B" composed of the combination "1110" is generated. In this way, it is possible to generate the signals "0" and "1" uniquely indicating the IDs "A" to "O".

Here, in the ID of "A", as all of the pins P0 to P3 are in the opened state, it is possible to reduce the manufacturing cost corresponding to the connecting member C10 because of no need for the connecting member C10. Further, as illustrated in Fig. 8, since the combination of signals contains only one "0" signal in common with the IDs of "B", "C", "E", and "I", the number of connecting members C10 can be settled to only one connecting member.

In this way, by applying ID, which does not require the connecting member C10 at all or which requires a minimum number of connecting members C10 as an ID for identifying a common component throughout a plurality of types of vehicles or all kinds of vehicles, it is possible to reduce the cost required for the whole manufacturing of vehicles.

As for the pin P 19 as the terminal for setting output device, when setting output device for the variation X in the first custom IC 301A, as illustrated in Fig. 7A, the first terminal t100 and the second terminal t101 are brought into a non-connection state (that is, the opened state indicated by "1" in the diagram of Fig. 4). Then, as there is no need of using the connecting member C100 under the opened state, it is possible to save the manufacturing cost.

On the other hand, when setting output device for the variation Y in the second custom IC 301B, as illustrated in Fig. 7B, the first terminal t100 and the second terminal t101 are connected to each other through the connecting member C100.

Then, when the output device is set for the variation X, the control program, the control data, and the like for the variation X, which are stored in the predetermined area 105a of the nonvolatile RAM 105, are selectively read out in accordance with a potential appearing at the pin P19 as the terminal for setting output device and the command from the master unit M illustrated in Fig. 5, thereby executing the control of an output device (e.g. a motor or the like) connected to the first custom IC 301A.

Meanwhile, when the output device is set for the variation Y, the control program, the control data, and the like for the variation Y, which are stored in the predetermined area 105b of the nonvolatile RAM 105, are selectively read out in accordance with the GND potential appearing at the pin P 19 as the terminal for setting output device and the command from the master unit M illustrated in Fig. 5, thereby executing the control of an output device (e.g. a valve or the like) connected to the second custom IC 301B.

In the custom IC 301 according to the second embodiment, a variety of controls can be executed by combining the IDs "A" to "O" established by the pins P0 to P3 as the ID setting terminals with the variations X, Y established by the pin P 19 as the terminal for setting output device.

That is, in a manufacturer or the like, there exists a case that the custom IC 301 has a different application depending on the type of a vehicle, its grade, and the like even with the same ID. For instance, there is a case that a combination of ID: "A" and variation: "X" is set for a slave unit connected to the in-vehicle LAN in vehicle type 1, while a combination of ID: "A" and variation: "Y" is set for a slave unit connected to the in-vehicle LAN in vehicle type 2.

In such a case, it was difficult for the conventional custom IC to easily meet the situation because there was a need to mount an exclusive chip with respect to each of the vehicle type 1 and the vehicle type 2.

On the other hand, according to the custom IC 301 according to the second embodiment, it is possible to easily select the combinations of the IDs "A" to "O", which are set by the pins P0 to P3 as the ID setting terminals, with the variations "X", "Y", which are set by the pin P19 as the terminal for setting output device, by the presence and absence of the connection using the connecting members C10, C100, and also possible to easily cope with various kinds of controls coming from the type of a vehicle, its grade, and the like, thereby allowing the convenience of the custom IC to be improved remarkably.

In connection, if there is no need of setting the variation "X" or "Y", the terminal for setting output device may be omitted to reduce the manufacturing cost.

In the custom IC 301 (301A, 301B) according to the second embodiment, as a dip switch or the like is not required for setting ID, it is possible to save the manufacturing cost furthermore with the reduced number of components.

Although the configuration examples illustrated in Figs. 7A and 7B illustrate the arrangements of connecting or disconnecting the third terminals t0 to t3 to or from the fourth terminals t10 to t13, the configuration is not limited to this, and the pins P0 to P3 as the ID setting terminals may be directly connected to or disconnected from the fourth terminals t10 to t13, provided that the third terminals t0 to t3 are omitted.

Further, the in-vehicle LAN connecting the custom IC 301 (301 A, 301 B) is not limited to CXPI, but a CAN (Controller Area Network), LIN (Local Interconnect Network), or the like can also be adopted.

## Claims

1. A custom IC designed so as to control an operation of a predetermined output device, comprising:
one or more terminals for setting output device capable to set control information corresponding to the predetermined output device to be connected to an output terminal of the custom IC, wherein
a setting signal outputted from the terminals for setting output device is generated depending on presence or absence of a connection between each of the terminals for setting output device and a ground potential through a conductive connecting member.

2. The custom IC of claim 1, further comprising
a storing device configured to store one or more control information corresponding to the predetermined output device.

3. The custom IC of claim 1, further comprising
one or more ID setting terminals capable to set an ID for identifying the custom IC, wherein
ID information to be outputted from the ID setting terminals is generated by presence or absence of a connection between each of the ID setting terminals and the ground potential through the connecting member.

4. The custom IC of claim 1, wherein
the custom IC is connected to an in-vehicle LAN to constitute a slave unit, and
the custom IC is configured to control an operation of the predetermined output device as an on-vehicle apparatus mounted on a vehicle in accordance with a command from a master unit connected to the in-vehicle LAN.
